Europäisches Patentamt

European Patent Office

Office européen des brevets

(19)

(11) Publication number: **0 274 648 B1**

## EUROPEAN PATENT SPECIFICATION

(12)

(45) Date of publication of patent specification: **24.07.91**

(51) Int. Cl.⁵: **G06F 13/36**, G06F 13/14

(21) Application number: **87117871.1**

(22) Date of filing: **03.12.87**

(54) Arbitration circuit.

(30) Priority: **12.12.86 IT 2265386**

(43) Date of publication of application:
**20.07.88 Bulletin 88/29**

(45) Publication of the grant of the patent:
**24.07.91 Bulletin 91/30**

(84) Designated Contracting States:
**DE FR GB**

(56) References cited:
**EP-A- 0 122 773**
**DE-A- 1 487 826**

**IEEE TRANSACTIONS ON COMPUTERS, vol.
C-24, no. 6, June 1975, pages 604-615; G.R.
COURANZ et al.: "Theoretical and experi-
mental behavior of synchronizers operating
in the metastable region"**

**PATENT ABSTRACTS OF JAPAN, vol. 8, no.
171 (P-293)[1608], 8th August 1984; & JP-A-59
68 069 (FUJITSU K.K.) 17-04-1984**

(73) Proprietor: **BULL HN INFORMATION SYSTEMS
ITALIA S.p.A.**
**Via Martiri d'Italia 3**
**I-10014 Caluso (Torino)(IT)**

(72) Inventor: **Boioli, Roberto**
**Via Martiri di Belfiore 2**
**I-20020 Busto Garolfo (MI)(IT)**
Inventor: **Tagliabue, Pierluigi**
**Via Budua 6**
**I-20159 Milano(IT)**

## Description

The present invention relates to an arbitration circuit for granting access to common resources, such as for instance, a system bus in a data processing system, a functional unit such as a working memory or like.

It is known that in current data processing systems several intelligent functional units are connected to each other and to common resources, such as a working memory, by means of a common communication bus, on which the several units may place electrical signals, representative of addresses, data, commands in competing mode, one unit at a time.

In order to avoid access to the common resource simultaneously by more than one unit, access arbitration circuits are used, which grant permission for access to the common resource, to one of several requesting units, according to suitable priority criteria and, if required, in compliance with preestablished and so called "communication protocols".

Several embodiments of arbitration circuits are known, which make use of logical networks built up with discrete logic components, performing elementary logic functions or with integrated circuits, performing all the required functions, but very expensive.

With the advent on the market of programmable integrated ciruits such as the programmable array logics PAL, it has been proposed to implement such arbitration circuits with the new available tools, thus reducing the cost of the arbitration circuits so implemented.

A fundamental problem which must be solved in the implementation of arbitration circuits with parallel priority resolution is the synchronization of the several access requests to the common resources.

The several units which need to get access to common resources, generate their access requests in asynchronous way the one to the other.

Such requests, if directly conveyed in a priority logic network, could give rise to spurious transient output signals, which must be avoided.

To this purpose, the use of registers for latching the several access requests, periodically controlled by a clock signal to strobe the status of the requests at a given time, does not suffice. In fact, the latching registers too, if the input signal is changing in the time interval which immediately preceeds the latching instant established by the clock signal, that is during the so called "set up time" can take an unstable state, with oscillation of the output signal.

Such oscillation may theoretically last indefinitely even if practically they end and give rise to a stable state once a time interval has elapsed equal to 2 times the so called "TPD" (or propagation delay) of the latching component.

Therefore the latching of the asynchronous requests is performed by means of two registers, cascade connected and triggered by a periodic clock signal. With a first clock signal the several requests are latched in the first register and from there are latched in the second register with a second clock signal. The time interval between the first clock signal and the second clock signal must be equal at minimum to 2 tpd + 2 st2 where tpd is the "time propagation delay" of the first register and st2 is the "set up time" of the second register.

The signals in output from the second register are inputted to a priority logical network which enables in output the one and only the one, among the signals present at the input, which has the highest priority.

By so doing, the risk of spurious output signals is not completely avoided.

In fact the second register may exhibit a certain spread of the input signal propagation delay to output from the clock signal, which added to the signal scattering due to different length connections and to different component circuits, may still give rise to spurious output signals, which ends within the maximum time propagation delay of the priority network.

In order to avoid such spurious signals a third latching station is generally used downstream the priority network.

The third latching station is clocked by a third clock signal. Another possible way to avoid spurious signals is to have a first latching register clocked by a first clock signal upstream of the priority network and a second latching register clocked by a second clock signal downstream of the priority network, the delay time of the second clock to the first one providing an adequate "set up" time for both the signals in output from the first register and the signals in output from the priority network.

An example of this approach is provided by the Japanese publication JP-A-59-68069.

According to the above criteria it is possible to design arbitration circuits, for example implemented PALs, provided at least two latching registers are used.

The invention is set out in claims 1 and 2. It provides for an arbitration circuit which is further advantageous in that it requires one register only for synchronization and latching of the requests and a PAL without need of further latching registers.

Therefore it is simpler in design, less expensive and has an arbitration time lesser than the one of the prior art circuits.

Substantially the arbitration circuit is based on the concept of using a square wave timing signal both as clocking signal for the latching register as well as gating or masking signal for the inputs of the priority network, so as to mask the possible transients which may occur at the output of the latching register, so as to enable the priority network only when the status of the input signals is stable.

The timing signal is used as enabling/masking signal for all inputs of the priority network, so that a latching register downstream the priority network is not needed and a feedback signal suffices for overriding the priority network output signal when, in the course of a following period of the clock signal, the clock signal would tend to remove it.

In addition the priority network may easily implement all conditions required for compliance with the several communication protocols, without need of further cascade connected circuits.

These and other features will appear more clearly from the following description of a preferred embodiment of the invention and from the enclosed drawings where:

Figure 1:    shows in timing diagram a first communication protocol, broadly used by central processing units and microprocessors (CPU).

Figure 2:    shows in timing diagram a second communication protocol, broadly used by peripheral controllers (I/O controller).

Figure 3:    is a block diagram of a typical electronic data processing system architecture.

Figure 4:    is a circuit diagram of arbitration circuit for the system of fig. 3, implemented in accordance with the present invention.

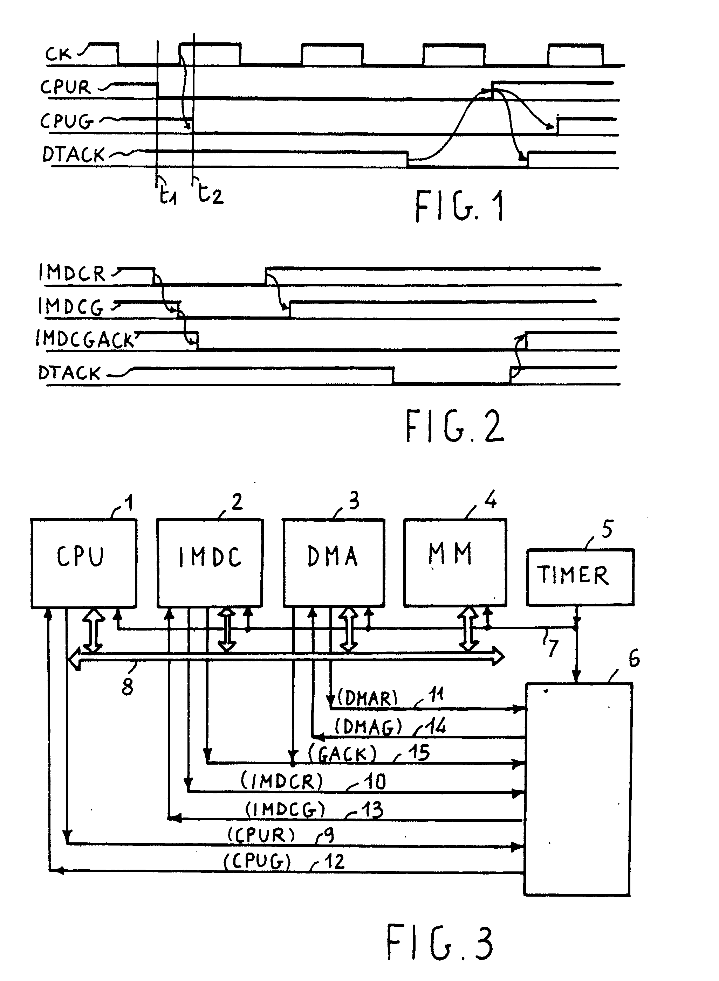

Figure 1 shows by diagram CPUR that a central processing unit CPU asserts a system bus access request (for instance in order to communicate with a working memory) by dropping signal CPUR at time t1 from electrical level 1 to level 0.

At generical time t2, an arbitration circuit, timed by a periodic signal CK, grants access to the system bus and to the memory by asserting an answer signal CPUG which is dropped from electrical level 1 to level 0.

Then CPU may perform an information exchange with the memory, through the bus. Once the CPU has taken control over the bus, the memory communicates the validity of a data present on the communication bus by assertion of signal DTACK which is dropped from electrical level 1 to level 0.

On detection of this event, the CPU closes the communication cycle by removing signal CPUR with a suitable delay as to DTACK, by raising CPUR from 0 level to 1.

In this way the communication cycle between CPU and MM is ended.

The arbitration circuit detects the raising of CPUR to 1 and correspondingly raises to 1 the signal CPUG to indicate that the bus is no more available to the CPU.

In similar manner figure 2 shows a second type of communication protocol where a generical peripheral controller IMDC requests access to the system bus by dropping at generical time t1 a signal IMDCR.

This operation is performed only if the bus is free and available.

The bus state is defined by the level of a signal GACK, which at level 1 indicates that no peripheral controller is owing the bus and which at level 0 indicates that one among the controllers is owing the bus.

The peripheral controller IMDC receives such signal and is enabled to broadcast the bus access request IMDCR only if GACK = 1.

At a generic instant t2 defined by a periodic clock signal CK the arbitration circuit detects the request IMDCR and grants bus access by lowering a signal IMDCG.

This signal is received by controller IMDC which takes control over the bus by lowering signal GACK.

Thereafter the controller IMDC may remove the access request by raising signal IMDRC.

Consequently the arbitration circuit, in synchronism with the timing signal CK rises to 1 Signal IMDCG.

However, as long as signal GACK is at level 0., the IMDC controller may put information over the bus or receive information through the bus and the arbitration circuit cannot grant bus access to any other unit.

When the information exchange is concluded, controller IMDC rises signal GACK to 1 and makes available the bus.

Figure 3 shows in block exemplary diagram a data processing system architecture which makes use of an arbitration circuit implemented in accordance with the present invention.

The system comprises a central unit CPU 1, a peripheral controller IMDC 2, a direct memory access unit DMA 3, a shared memory 4, a timing unit 5 and an arbitration circuit 6.

Units 1,2,3,4 are connected each other by a bus 8, through which information is exchanged between each of the units 1,2,3 and the memory 4.

Timing unit 5 provides the several units, including the arbitration circuit 6 and through lead 7, a square wave timing signal CK, having for instance the frequency of 20 MHz.

This signal is used by the several units to generate suitable timing signals.

Units 1,2,3 forward to the arbitration circuit 6, on leads 9,10,11 respectively, bus access request signals CPUR, IMDCR, DMAR and receive from arbitration circuit 6, on leads 12, 13,14 respectively, bus grant signals CPUG, IMDCG,DMAG.

In addition, units 2,3 communicate with the arbitration circuit 6, through lead 15 to forward to arbitration circuit the signal GACK. Level of signal GACK may be lowered to 0 by each of the two units 2 and 3.

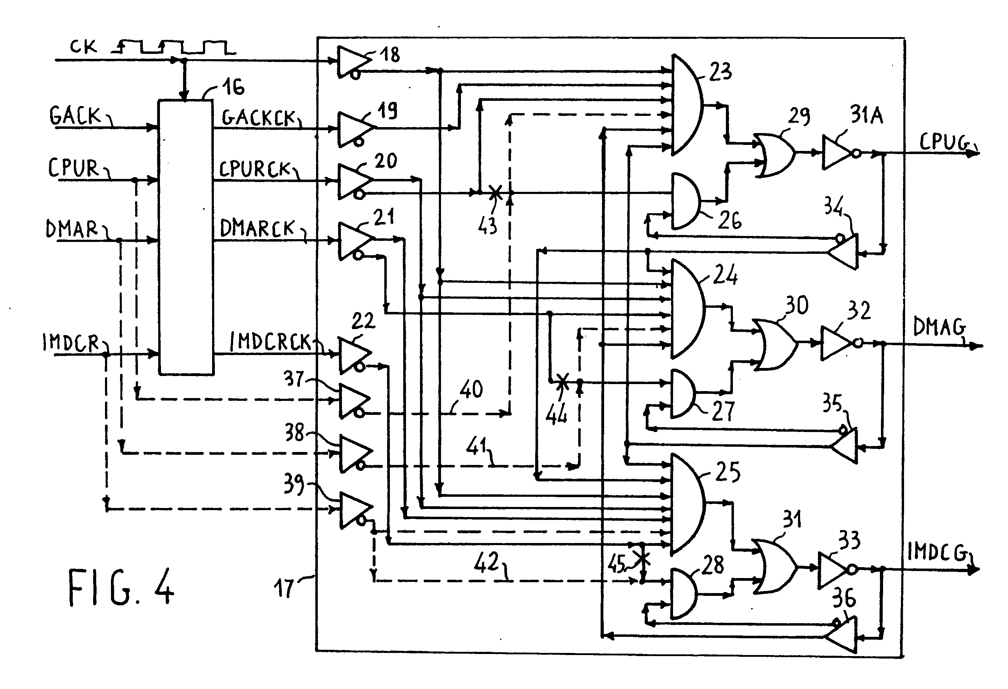

Figure 4 shows the electrical diagram of the arbitration circuit for the architecture of Fig. 3 implemented according to the present invention.

The arbitration circuit comprises a register 16, clocked by the raising edge of timing signal CK and a programmable array logic 17.

The programmable array logic 17, for instance of the type AmPAL16L8, manufactured by the AMD firm, may be programmed to obtain the connections shown in figure 4.

PAL 17 comprises: a plurality of input receivers 18,19, 20,21,22 having direct and inverted output, a plurality of AND gates 23,24,25,26,27,28 having a number of inputs which depends on the performed programming, a plurality of OR gates 29, 30, 31 programmed for having two inputs, a plurality of inverting output drivers 31A, 32, 33 and a plurality of feedback receivers 34, 35, 36, having inverting and non inverting output.

Register 16 receives as inputs the signals GACK, CPUR, DMAR, IMDCR and at each raising edge of clock CK latches the state of such signals producing in output the corresponding signals GACKCK, CPUCK, DMARCK, IMDCRCK.

Being the input signals asynchronous, the electrical level of the outputs may oscillate for a certain period of time, but a stable state is reached when, after 25 nsec, clock signal CK (Having a frequency of 20 MHz, hence a period of 50 nsec). falls to level 0.

Signals GACKCK, CPURCK, DMARCK, IMDCRCK are inputs to receivers 19, 20, 21, 22 respectively, whilst signal CK is input to receiver 18.

Without entering in a piecemeal description of the electrical connections among the elements from 18 to 36, which is immediately comprehensible on the basis of Figure 4, it will be noted that the shown connections provide the following logical functions (with logic inverted as to the electrical level of the signals):

CPUG =
CPURCK.NIMDCG.NDMAG.NGACKCK.CK + CPUG-
.CPURCK
DMAG =
DMARCK.NCPURCK.NCPUG.NIMDCG.CK + DMAG.DMARCK
IMDCG =
IMDCRCK.NCPURCK.NCPUG.NDMAG.NDMARCK-
.CK + IMDCG.IMDCRCK

(The letter "N", preceding the signal names, indicates the inversion or negation operator)

In other words the arbitration circuit 17 produces in output, in mutually exclusive way, one of the signals CPUG (as output from driver 31A), DMAG (as output from driver 32),IMDCG (as output from driver 33),if predetermined conditions are met

From a functional standpoint AND gates 23, 24, 25, togegher with inverting receivers 18, 19, 20, 21, 22 form an arbitration or priority network, periodically enabled by signal CK.

AND gates 26, 27, 28, together with OR gates 29, 30, 31, output drivers 31A, 32, 33 and feedback receivers 34, 35, 36 form three feedback loops, each for respectively maintaining at the output of network 17, signal CPUG, DMAG, IMDCG (generically XXXG) during the time intervals in which CK = 1 and therefore the arbitration circuit is disabled.

Each of the feedback loops is controlled by a signal CPURCK, DMARCK and LMDCRCK respectively, (generically XXXRCK) so that the holding function for output signal XXXG is disabled when the request in input XXXRCK which has caused its generation ends.

The arbitration network shown in Fig. 4 and formed by AND gates 23, 24, 25 assigns an ordered decreasing priority to signals CPUR, DMAR, IMDCR.

It is however clear that depending on requirements a different priority order may be established.

The described arbitration circuit takes in due account the conditions for compliance with both described communication protocols and a bus grant signal XXXG is generated, which depends, not only on the established priority, but also on the condition that the bus is effectively free.

This condition is expressed, depending on case, by signal GACK at level 1 together with the bus grant signals DMAG, MDCG, if the requesting unit is the CPU 1, or by signals CPUR and GACK at level 1, if the requesting unit is one of the controllers IMDC 2, DMA3.

It is however clear that the arbitration circuit may be adapted to perform in compliance with protocols other than the described ones, as well as with with protocols which use a direct logic instead of an inverted logic, as the one described. By direct logic it is meant a logic in which logical levels 1 and 0 correspond to electrical levels 1 and 0 respectively.

It may be noted that whilst the assertion of signals XXXG is oscillation exempt, the removal of such signals may be affected by oscillation because AND gates 26, 27, 28 are not periodically masked by signal CK.

Therefore the asynchronous removal of the request signal may cause oscillation of the corresponding signals XXXRCK in output from register 16, which oscillations propagates down (through AND gates 26, 27, 28) to the output of drivers 31A, 32, 33 and cause oscillation of signals XXXG.

This does not result in malfunctioning, because if the phenomenom occurs, it occurs at the end of a bus access cycle in the half period of signal CK during which a new bus access cycle cannot start.

The next following bus granting is therefore unaffected by such possible oscillation and at level of receiving unit a spurious XXXG signal cannot be construed as a new bus grant signal, missing a new specific request.

In fact, once a unit has completed its bus access request, a time interval generally elapses which suffices for the stabilization of signal XXXG at electrical level 1.

However, if required, even this uncertainty can be removed by providing in output to AND gates 26, 27, 28 and in lieu of clocked signals outputted from register 16, through inverting drivers 20, 21, 22, the signals in output from the requesting units, through inverting drivers 37, 38, 39 of PAL 17 and the connections shown in dotted lines (Fig. 4).

The disconnections shown as crosses in Fig. 4. will have to be performed.

As shown, the AND gates 23, 24, 25 will have to receive the signals in output from inverters 37, 38, 39. respectively, to avoid oscillation at the output of such gates too.

## Claims

1. Arbitration circuit for granting common resource access to one among a plurality of units comprising:
   - a register (16) having inputs for receiving a plurality of asynchronous access requests XXXR, a clock input receiving a periodic timing square wave signal (CK), the access requests present at said inputs being latched into said register at each transition of said timing signal from a first electrical level to a second level,
   - an arbitration logical network (18,19,20,21,22,23,24,25) having inputs connected to the outputs of said register for asserting one resource grant signal of a plurality of resource grant signals XXXG, as a function of the signals received from said register and of preestablished priority criteria, characterized in that said arbitration logical network receives further as input said timing signal (CK) for inhibiting the assertion of any resource grant signal in output from said logical network, during the half period of said timing signal following said transition from said first to said second level, and further characterized in that said arbitration circuit further comprises holding logic circuits (26,34,27,35,28,36,29,31A,30,32,31,33), each corresponding to one output of said arbitration logical network, and each receiving in input a corresponding signal of said plurality of resource grant signals in output from said logical network and a corresponding signal of said signals in output from said register, said holding logic circuits transferring in output and holding asserted said one resource grant signal also in the half periods during which said logical network is inhibited by said timing signal, said resource grant in output from said holding logic circuits being also input as a holding feedback to the corresponding holding logic circuit.

2. Arbitration circuit for granting common resource access to one among a plurality of units comprising:
   - a register (16) having inputs for receiving a plurality of asynchronous access requests XXXR, a clock input receiving a periodic timing square wave signal (CK), the access requests present at said inputs being latched into said register at each transition of said timing signal from a first electrical level to a second level,
   - an arbitration logical network (18,19,20,21,22,23,24,25) having inputs connected to the outputs of said register for asserting one resource grant signal of a plurality of resource grant signals XXXG, as a function of the signals received from said register and of preestablished priority criteria, characterized in that said arbitration logical network receives further as input said timing signal (CK) for inhibiting the assertion of any resource grant signal in output from said logical network, during the half period of said timing signal following said transition from said first to said second level, said arbitration logical network receives further as input said plurality of asynchronous access requests XXXR for inhibiting in asynchronous mode the assertion of a resource grant signal, if the corresponding asynchronous access request is deasserted,

and further characterized in that
said arbitration circuit further comprises holding logic circuits (26,34,27,35,28,36,29,31A,30,32,31,33,) each corresponding to one output of said logical network, and each, receiving in input a corresponding signal of the signals in output from said logical network and a corresponding request of said plurality of asynchronous access requests, for transferring in output and holding asserted said one resource grant signal also in the half periods in which said arbitration logical network is inhibited by said timing signal, as long as the corresponding asynchronous access request is asserted in input, said resource grant signal in output from said holding logic circuits being also input as a holding feedback to the corresponding holding logic circuit.

## Revendications

1. Circuit d'arbitrage pour autoriser un accès aux ressources communes à une unité parmi Plusieurs unités comprenant :
   - un registre (16) ayant des entrées pour recevoir plusieurs demandes d'accès asynchrones XXXR, une entrée d'horloge recevant un signal d'onde rectangulaire de synchronisation périodique (CK), les demandes d'accès présentes auxdites entrées étant verrouillées dans ledit registre à chaque transition dudit signal de synchronisation du premier niveau électrique vers un second niveau,
   - un réseau logique d'arbitrage (18, 19, 20, 21, 22, 23, 24, 25) ayant des entrées connectées aux sorties dudit registre pour fournir un signal d'autorisation ressource parmi plusieurs signaux autorisation ressources XXXG, en fonction des signaux reçus à partir dudit registre et des critères de priorité préétablis,
   caractérisé en ce que
   ledit réseau logique d'arbitrage reçoit en outre comme entrée ledit signal de synchronisation (CK) pour inhiber l'excitation d'un quelconque signal autorisation ressource à la sortie dudit réseau logique, pendant la moitié de la période dudit signal de synchronisation suivant ladite transition dudit premier audit second niveau,
   et caractérisé en outre en ce que
   ledit circuit d'arbitrage comprend en outre des circuits logiques de maintien (26, 34, 27, 35, 28, 36, 29, 31A, 30, 3Z, 31, 33), chacun d'eux correspondant à une sortie dudit réseau logique d'arbitrage, et chacun d'eux recevant en entrée un signal correspondant parmi lesdits divers signaux permission ressource à la sortie dudit réseau logique et un signal correspondant parmi lesdits signaux à la sortie dudit registre, lesdits circuits logiques de maintien transférant en sortie et maintenant excité ledit signal autorisation ressource également dans les moitiés de période pendant lesquelles ledit réseau logique est inhibé par ledit signal de synchronisation, ledit signal permission de ressource à la sortie desdits circuits logiques de maintien étant également entré comme retour de maintien du circuit logique de maintien correspondant.

2. Circuit d'arbitrage pour autoriser un accès aux ressources communes à un organe parmi les divers organes comprenant
   - un registre (16) ayant des entrées pour recevoir plusieurs demandes d'accès asynchrones XXXR, une entrée d'horloge recevant un signal d'onde rectangulaire de synchronisation périodique (CK), les demandes d'accès présentes auxdites entrées étant verrouillées dans ledit registre à chaque transition dudit signal de synchronisation du premier niveau électrique vers un second niveau,
   - un réseau logique d'arbitrage (18, 19, 20, 21, 22, 23, 24, 25) ayant des entrées connectées aux sorties dudit registre pour fournir un signal autorisation ressource parmi plusieurs signaux permission ressources XXXG, en fonction des signaux reçus à partir dudit registre et des critères de priorité préétablis,
   caractérisé en ce que
   ledit réseau logique d'arbitrage reçoit en outre comme entrée ledit signal de synchronisation (CK) pour inhiber la fourniture d'un quelconque signal autorisation ressource à la sortie dudit réseau logique, pendant la moitié de la période dudit signal de synchronisation suivant ladite transition dudit premier audit second niveau,
   ledit réseau logique d'arbitrage reçoit de plus comme entrée lesdites diverses demandes d'accès asynchrones XXXR pour inhiber en mode asynchrone la fourniture d'un signal autorisation ressource, si la demande d'accès asynchrone correspondante n'est pas fournie,
   et caractérisé en outre en ce que
   ledit circuit d'arbitrage comprend en outre des circuits logiques de maintien (26, 34, 27, 35, 28, 36, 29, 31, 30, 32, 31, 33), chacun d'eux correspondant à une sortie dudit réseau logique d'arbitrage, et chacun d'eux recevant en entrée un signal correspondant des signaux en sortie dudit réseau logique et une demande correspondante desdites diverses demandes d'accès asynchrones, pour transférer en sortie et maintenir la Fourniture dudit signal autorisation ressource unique également dans les demi-périodes dans lequel les ledit réseau logique d'arbitrage est inhibé par ledit signal de synchronisation, tant que la demande d'accès asynchrone correspondante est appliquée en entrée, ledit signal autorisation ressource en sortie desdits circuits logiques de maintien étant également entrés en tant que retour de maintien du circuit logique de maintien correspondant.

## Patentansprüche

1. Arbiterschaltung, um einer von mehreren Einheiten Zugriff zu einer gemeinsamen Signalquelle zu gewähren, mit
   - einem Register (16) mit Eingängen zum Empfang mehrerer asynchroner Zugriffsanforderungen (XXXR), einem Takteingang für ein periodisches Rechteck-Taktsignal (CK), wobei die Zugriffsanforderungen an den Eingängen bei jedem Übergang des Taktsignals von einem ersten auf einen zweiten Pegel in das Register eingespeichert werden;
   - einem logischen Arbiternetzwerk (18, 19, 20, 21, 22, 23, 24, 25), dessen Eingänge an die Ausgänge des Registers angeschlossen sind, wobei als Funktion der vom Register ankommenden Signale und vorgegebener Prioritätskriterien eines aus einer Vielzahl von Quellenzuordnungssignalen (XXXG) bereitgestellt wird, **dadurch gekennzeichnet, daß** das logisch Arbiternetzwerk als Eingangssignal ferner das Taktsignal (CK) empfängt, um die Bereitstellung irgendeines Quellenzuordnungssignals am Ausgang des Logiknetzwerkes während derjenigen Halbperioden des Taktsignals zu sperren, welche auf den genannten Übergang vom ersten auf den zweiten Pegel folgen;
   und ferner **dadurch gekennzeichnet,** daß die genannte Arbiterschaltung ferner logische Haltekreise (26, 34, 27, 35, 28, 36, 29, 31A, 30, 32, 31, 33) enthält, von denen jeder einem der Ausgänge des logischen Arbiternetzwerks entspricht und die am Eingang einerseits ein entsprechendes Signal der Vielzahl von Quellenzuordnungssignalen vom Ausgang des Logiknetzwerkes und andererseits ein entsprechendes Signal der Signale am Ausgang des Registers empfangen, und wobei die logischen Haltekreise das eine Quellenzuordnungssignal auch in denjenigen Halbperioden an den Ausgang übertragen und zugeordnet halten, in denen das logische Netzwerk durch das Taktsignal gesperrt ist, und wobei das Quellenzuordnungssignal am Ausgang der logischen Haltekreise als Halterückführsignal einem Eingang der entsprechenden Haltelogikschaltung zugeführt wird.

2. Arbiterschaltung, um einer von mehreren Einheiten Zugriff zu einer gemeinsamen Signalquelle zu gewähren, mit
   - einem Register (16) mit Eingängen zum Empfang mehrerer asynchroner Zugriffsanforderungen (XXXR), einem Takteingang für ein periodisches Rechteck-Taktsignal (CK), wobei die Zugriffsanforderungen an den Eingängen bei jedem Übergang des Taktsignals von einem ersten auf einen zweiten Pegel in das Register eingespeichert werden;
   - einem logischen Arbiternetzwerk (18, 19, 20, 21, 22, 23, 24, 25), dessen Eingänge an die Ausgänge des Registers angeschlossen sind, wobei als Funktion der vom Register ankommenden Signale und vorgegebener Prioritätskriterien eines aus einer Vielzahl von Quellenzuordnungssignalen (XXXG) bereitgestellt wird, **dadurch gekennzeichnet , daß** das logisch Arbiternetzwerk als Eingangssignal ferner das Taktsignal (CK) empfängt, um die Bereitstellung irgendeines Quellenzuordnungssignals am Ausgang des Logiknetzwerkes während derjenigen Halbperioden des Taktsignals zu sperren, welche auf den genannten Übergang vom ersten auf den zweiten Pegel folgen; das logische Arbiternetzwerk ferner am Eingang die Vielzahl asynchroner Zugriffsanforderungen (XXXR) empfängt, um bei Asynchronbetrieb die Zuordnung eines Quellenzuordnungssignals zu sperren, falls die entsprechende asynchrone Zugriffsanforderung nicht zugeordnet ist; und ferner **dadurch gekennzeichnet,** daß

die genannte Arbiterschaltung ferner logische Haltekreise (26, 34 27, 35, 28, 36, 29, 31A, 30, 32, 31, 33) enthält, von denen jeder einem Ausgang des Logiknetzwerks entspricht und am Eingang ein entsprechendes Signal von den Ausgangssignalen des logischen Netzwerks sowie eine entsprechende Anforderung aus einer Vielzahl von asynchronen Zugriffsanforderungen empfängt, um das eine Quellenzuordnungssignal auch in denjenigen Halbperioden, in denen das logische Arbiternetzwerk durch das Taktsignal gesperrt ist, an den Ausgang zu übertragen und dort solange bereitgestellt zu halten, wie die entsprechende asynchrone Zugriffsanforderung am Eingang zugeordnet ist; wobei das Quellenzuordnungssignal am Ausgang der logischen Halteschaltung als Halterückführsignal auch dem Eingang des entsprechenden logischen Haltekreises zugeführt wird.

FIG. 1

FIG. 2

FIG. 3

FIG. 4